# EUROPEAN PATENT SPECIFICATION

(11) **EP 4 111 648 B1**
(45) Date of publication and mention of the grant of the patent: **08.04.2026**
(21) Application number: 21712621.8
(22) Date of filing: 22.02.2021
(51) Int. Cl.: H04L 45/00, H04L 45/02

(54) **COMPRESSING SEGMENT IDENTIFIERS FOR SEGMENT ROUTING**
KOMPRIMIERUNG VON SEGMENTIDENTIFIKATOREN FÜR SEGMENTROUTING
COMPRESSION D'IDENTIFIANTS DE SEGMENTS POUR ROUTAGE DE SEGMENTS

(30) Priority: 17.04.2020 US 202063011513 P
(43) Date of publication of application: 04.01.2023
(73) Proprietor: Huawei Technologies Co., Ltd., Shenzhen, Guangdong 518129 (CN)
(72) Inventor: CHEN, Huaimo, Plano, Texas 75024 (US)
(74) Representative: Grünecker Patent- und Rechtsanwälte PartG mbB
(86) International application number: PCT/US2021/019060
(87) International publication number: WO 2021/211211

(56) References cited:
- LI C LI HUAWEI TECHNOLOGIES C XIE CHINA TELECOM K LEE LG U+ H TIAN F ZHAO CAICT J GUICHARD FUTUREWEI TECHNOLOGIES C LI CHINA TELEC: "Compressed SRv6 Network Programming; draft-li-spring-compressed-srv6-np-02.txt", no. 2, 25 February 2020 (2020-02-25), pages 1 - 24, XP015137894, Retrieved from the Internet <URL:https://tools.ietf.org/html/draft-li-spring-compressed-srv6-np-02> [retrieved on 20200225]

## Description

### TECHNICAL FIELD

In general, this disclosure describes techniques for forwarding a packet in a segment routing network. More specifically, this disclosure ensures that the packet is forwarded with a compact segment routing header.

### BACKGROUND

In traditional Internet Protocol (IP) network routing, IP packets are forwarded based on a routing table built by routing protocols. The route taken by the IP packets is usually the shortest path calculated by the routing protocols. In segment routing, the source chooses a path and encodes it in the packet header as an ordered list of segments. The rest of the network executes the encoded instructions.

In an Internet Protocol version 6 (IPv6) data plane, an ordered list of segments is encoded in a routing extension header; however, new hardware is required. In segment routing version 6 (SRv6), a Segment Routing IPv6 Header (SRH) is added to an original packet as an IPv6 extension header that may cause the original packet to grow indefinitely. The IPv6 extension header increases the size of the packet, resulting in the potential for the packet to exceed packet size limits.
LI C LI HUAWEI TECHNOLOGIES C XIE CHINA TELECOM K LEE LG U+ H TIAN F ZHAO CAICT J GUICHARD FUTUREWEI TECHNOLOGIES C LI CHINA TELEC, "Compressed SRv6 Network Programming; draft-li-spring-compressed-srv6-np-02.txt", no. 2, (20200225), pages 1 - 24, COMPRESSED SRV6 NETWORK PROGRAMMING; DRAFT-LI-SPRING-COMPRESSED-SRV6-NP-02.TXT; INTERNET-DRAFT: SPRING WORKING GROUP, INTERNET ENGINEERING TASK FORCE, IETF; STANDARDWORKINGDRAFT, INTERNET SOCIETY (ISO), discloses a technique of segment routing on the IPv6 data plane based on a compressed SRv6 network programming mechanism in order to reduce the overhead of SRv6 by introducing a Compressed Segment Identifier (C-SID) and a Compressed Segment Routing Header (SRH).

### SUMMARY

A first aspect relates to a method implemented by a first node in a segment routing (SR) network domain comprising receiving, by the first node from a second node of another network domain, a packet configured to pass through the SR network domain in accordance with segment identifiers (SIDs), wherein a group of the SIDs have a first number of common consecutive data units; obtaining, by the first node, compressed SIDs (cSIDs) corresponding to the group of the SIDs, wherein each cSID comprises unique consecutive data units of a corresponding SID, and wherein the unique consecutive data units correspond to a second number of data units; generating, by the first node, a segment routing header (SRH) having a list of segments, wherein the list of segments comprises segments in order, wherein the segments include the SIDs that do not belong to the group and a container of the cSIDs, wherein the container has a length greater than 128 bits and further comprises the common consecutive data units for the group of the SIDs and an end of compression indicator that has a preset value, wherein the end of compression indicator is attached to an end of the cSIDs; adding, by the first node, the SRH to the packet; and forwarding, by the first node, the packet with the SRH to a third node in the SR network domain.

The end of compression indicator corresponds to a number of zeroes or ones having a length of the second number of data units or
the end of compression indicator corresponds to a last cSID in order.

Optionally, in any of the preceding aspects, another implementation of the aspect provides that the container further comprises one or more paddings that are inserted after the end of compression indicator to fill an empty space in the container, wherein each padding has a length of the second number of data units.

Optionally, in any of the preceding aspects, another implementation of the aspect provides that obtaining the cSIDs further comprises generating the SIDs in accordance with an SR policy of the SR network domain; and extracting, for each of the group of the SIDs, the unique consecutive data units in a respective SID as a cSID.

Optionally, in any of the preceding aspects, another implementation of the aspect provides receiving the cSIDs, and wherein determining the cSIDs comprises identifying the received cSIDs.

Optionally, in any of the preceding aspects, another implementation of the aspect provides that the first node is an ingress node or a border node of the SR network domain.

A second aspect relates to a method implemented by a first node in a segment routing (SR) network domain comprising receiving, by the first node from a second node of the SR network domain, a packet with an internet protocol (IP) header and a segment routing header (SRH), wherein the packet is configured to pass through the SR network domain in accordance with segment identifiers (SIDs), wherein a group of the SIDs have a first number of common consecutive data units, wherein the IP header includes a destination address (DA) for the packet, wherein the SRH comprises a list of segments and a segment left (SL) field, wherein the list of segments comprises segments in order, wherein the segments include the SIDs that do not belong to the group and a container of compressed SIDs (cSIDs), wherein the container has a length greater than 128 bits and further comprises a common consecutive prefix of a first number of data units for the group of the SIDs and an end of compression indicator (End-c), wherein each of the cSIDs comprises unique consecutive data units of a corresponding SID, and wherein the unique consecutive data units correspond to a second number of data units; updating, by the first node, a portion of the DA in the IP header with one of the cSIDs in accordance with the order; and forwarding, by the first node, the packet with the IP header and the SRH to a third node of the SR network domain in accordance with the updated DA.

A common prefix in the container is followed by a first cSID of data units, which is in turn followed by a second cSID of the data units, and wherein the method further comprises determining whether the second cSID is not an End-c, wherein and the current segment is indicated by a value in the SL field.

Optionally, in any of the preceding aspects, another implementation of the aspect provides copying the second cSID to the portion of the DA in response to determining the second cSID is not an End-c, wherein the portion follows the common prefix of the first number of common consecutive data units in the DA.

Optionally, in any of the preceding aspects, another implementation of the aspect provides shifting the cSIDs in the current segment left by the second number of data units starting from the second cSID in the current segment, copying the first cSID of the second number of data units in a next segment to the place of the last cSID of the second number of data units in the current segment, and copying the first cSID in the current segment to the portion of the DA.

Optionally, in any of the preceding aspects, another implementation of the aspect provides that the next segment is indicated by the SL value minus one, and wherein the first cSID of the second number of data units is leftmost in the next segment.

Optionally, in any of the preceding aspects, another implementation of the aspect provides determining whether the second cSID of the second number of data units in the next segment is a c-Tag, wherein the second cSID follows the first cSID in the next segment.

Optionally, in any of the preceding aspects, another implementation of the aspect provides that the c-Tag corresponds to a number of ones having a length of the second number of data units and the End-c corresponds to a number of zeroes having a length of the second number of data units, or wherein the c-Tag corresponds to a number of zeros having a length of the second number of data units and the End-c corresponds to a number of ones having a length of the second number of data units.

Optionally, in any of the preceding aspects, another implementation of the aspect provides removing the next segment by copying the current segment to the next segment and decrementing the SL value by one when the second cSID is determined to be the c-Tag.

Optionally, in any of the preceding aspects, another implementation of the aspect provides shifting the cSIDs left by the second number of data units starting from the second cSID in the next segment when the second cSID is determined to not be the c-Tag, and copying the c- Tag to the place of the last cSID in the next segment.

Optionally, in any of the preceding aspects, another implementation of the aspect provides that the first node is a transit node of the SR network domain.

Optionally, in any of the preceding aspects, another implementation of the aspect provides that a data unit is a byte, a nibble or a bit.

A third aspect relates to a node device comprising a receiver configured to receive a packet; a transmitter configured to transmit the packet; a memory coupled to the receiver and the transmitter, the memory storing instructions; and a processor coupled to the memory, the processor configured to execute the instructions to cause the node device to perform any of the methods disclosed herein.

A fourth aspect relates to a system, comprising: a first node; and a second node in communication with the first node device, wherein the first node or the second node performs any of the methods disclosed herein.

A fifth aspect relates to a means for forwarding a packet in a segment routing (SR) network domain, comprising: a packet receiving means configured to receive the packet to process; a packet transmission means coupled to the receiving means, the transmission means configured to forward the packet to another node; a storage means coupled to at least one of the receiving means or the transmission means, the storage means configured to store instructions; and a packet processing means coupled to the storage means, the packet processing means configured to execute the instructions stored in the storage means to perform any of the methods disclosed herein.

For the purpose of clarity, any one of the foregoing embodiments may be combined with any one or more of the other foregoing embodiments to create a new embodiment within the scope of the present disclosure.

These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates a network operating according to one embodiment.
FIG. 2 illustrates a segment routing header (SRH).
FIG. 3 illustrates a container of compressed segment identifiers (cSIDs).
FIG. 4A illustrates a container of cSIDs according to one embodiment.
FIG. 4B illustrates a container of cSIDs according to another embodiment.
FIG. 5 is an embodiment of a method of forwarding a packet implemented by a node in a segment routing (SR) network domain.
FIG. 6 is a schematic diagram of a node in the SR network domain.
FIG. 7 is a schematic diagram of an embodiment of a means for forwarding a segment in the SR network domain.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims.

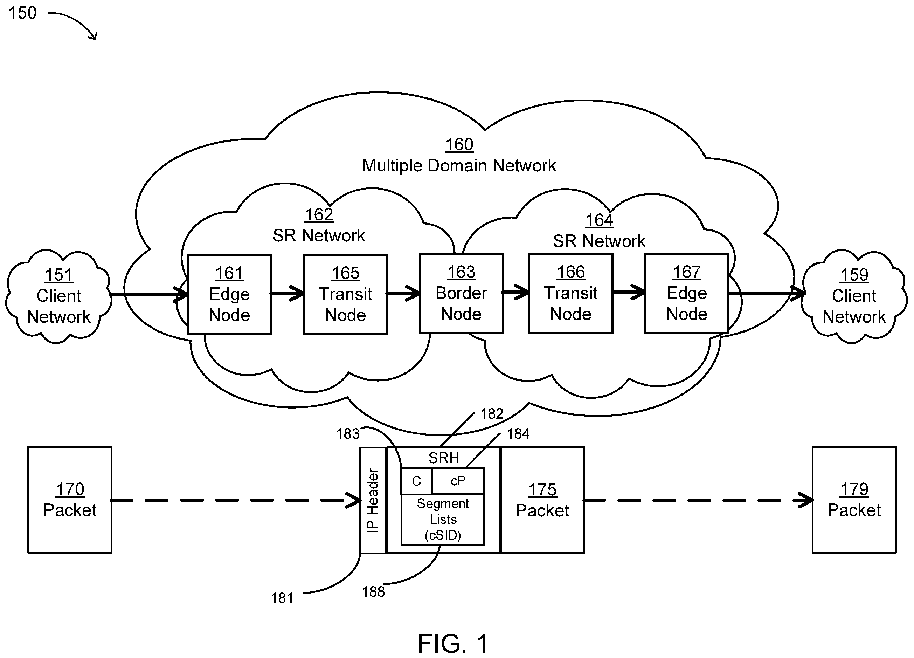

FIG. 1 illustrates a network 150 (e.g., an aggregation of one or more networks of one or more different entities) operating according to one embodiment. As shown, network 150 includes client networks 151 and 159 (which are the same network in one embodiment) communicatively coupled via edge nodes 161 and 167 (acting as an ingress or an egress node) of network 160. Network 160 includes multiple, N domains (162, 164) of network nodes, with N being a non-zero integer, interconnected via border node(s) (163). Each of client networks 151 and 159 may include hosts (e.g., end nodes) with upper-layer applications that communicate via network 150. In one embodiment, some of the hosts in client network 151 and/or 159 are Segment Routing-capable in that they can generate and process Segment Routing (SR) packets. The end nodes of the client networks 151 and 159 can transmit a packet (or a native packet) to the edge nodes 161 and 167 of the network 160. The packet can be an Internet Protocol version 4 (IPv4) packet, Internet Protocol version 6 (IPv6) packet, Ethernet frame/packet, or other protocol packet.

In one embodiment, the edge nodes 161 and 167 process packets received from networks 151 and 159, which may include encapsulating or otherwise processing these packets into SR (or SR-Multiprotocol Label Switching (MPLS)) packets such as by adding a SR header (SRH, sometime also referred to as a segment routing extension header) (and possibly another IP header) to these packets according to a data plane ascertained Segment Routing policy.

In one embodiment, an edge node (161, 167) or another node within network 160 determines a Segment Routing policy (e.g., a segment list that include segments that represent IP addresses (e.g., IPv6 addresses)) to apply to packets of a different packet flow. These policies can change in response to network conditions, network programming, etc. In one embodiment, the Segment Routing policy specifies to add one or more SRHs 182, each with one or more segment lists 188, resulting in a Segment Routing packet 175 having one or more SRHs 182. In one embodiment, a native packet 170 is received without an SRH (possibly with an IP Destination Address that is a Segment Identifier (SID)/IP address of the receiving node 161 or 167), and the receiving node 161 or 167 encapsulates the native packet 170 in an SR packet 175 including one or more added SRHs 182, each including one or more Segment lists 188. The node 161 or 167 also adds an IP header 181 that comprises a destination address (DA) of the packet. In one embodiment, a packet 170 is received with a Segment Routing header (not shown in FIG. 1), and with the receiving node 161 or 167 adding one or more SRHs 182 resulting in a Segment Routing packet including one or more added SRHs 182, each including one or more Segment lists 188. In contrast, and for each of these scenarios, a single SRH 182 could have been used that includes all of the segments in one segment list 188.

An SID (e.g., an SRv6 SID) includes a locator and a function (and optionally, any argument). The locator indicates which node in the multiple domain network 160 a packet 170 is to be routed to in order to perform the function. The function may be any possible function having any optional argument. In an embodiment, a group of SIDs has two common parts - one is the same common prefix of the first B bits; the other is the common function and arguments of the last R bits. In one embodiment, the last R bits are in common in the sense that the last R bits of each SID in the group are not used. That is, that the other bits (i.e., the first 128 - R bits) of each SID in the group are used to steer a packet and perform a function. The middle L bits of these SRv6 SIDs are different, where L = 128 - B - R bits. Accordingly, the group of SIDs can be compressed to cSIDs each having L bits of a unique locator. In one embodiment, the segment list 188 of the SRH 182 includes one or more cSIDs.

The SRH 182 also includes multiple fields such as a flag field with a C sub-field 183, and a tag field with a cSID pointer (cP) sub-field 184. In one embodiment, the C sub-field 183 is used to indicate whether the next segment in order is in a compressed form (i.e., cSID) or a regular form (i.e., SID). The cP sub-field 184 is used for a pointer to an active (or next) cSID.

After adding the SRH 182 and IP header 181 to the packet 175, the edge nodes 161 and 167 forward the encapsulated packet to transit nodes 165, 166. The transit nodes 165, 166 receive the encapsulated packet 175 and update a destination address (DA) in the IP header 181 based on an cSID in the segment list 188 (by using a value in the cP sub-field 184). Accordingly, the transit nodes 165, 166 forward the encapsulated packet 175 (which includes an updated IP header 181) to the next node (e.g., the border node 163 or edge node 167) in the multiple domain network 160 in accordance with the updated DA. Once the encapsulated packet 175 travels through the multiple domain network 160, the edge nodes 161 and 167 eventually decapsulate or remove an SRH 182 (and possibly the IP header 181) and forward the native packet 179 into network 159 or 151.

Disclosed herein are techniques that compress the SRH 182 by compacting the group of SIDs having the common B bits of locator and common R bits of function (optionally, arguments) into cSIDs that comprise only the unique L bits of the locator (and part of function and arguments). By compressing the group of SIDs in such a way, forwarding an encapsulated packet reduces network bandwidth and consequently increases packet transmission rate.

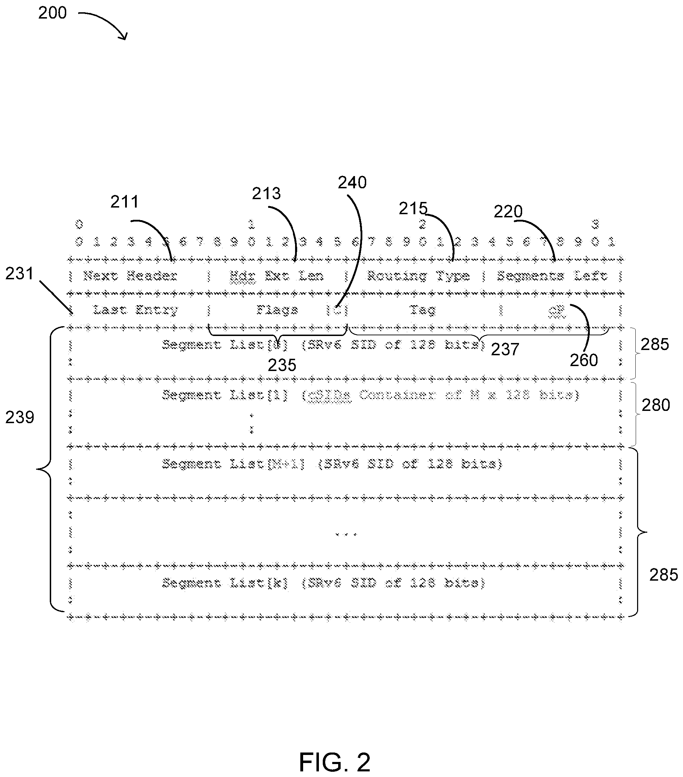

FIG. 2 illustrates a segment routing header (SRH) 200. The SRH 200 is similar to the SRH 182 in FIG. 1. Segment routing is defined in more detail in the Internet Engineering Task Force (IETF) draft "SRv6 Network Programming" ( https: //datatracker. ietf. org/doc/draft-filsfils-spring-srv6- network-programming) by C. Filsfils, et al., published October 7, 2020 and leverages the source routing paradigm. It is understood that an ingress node steers a packet through an ordered list of instructions. These list of instructions may be referred to as segments. Each one of these instructions represents a function to be called at a specific location in the network. A function is locally defined on the node where it is executed. This function may provide instructions that range from moving forward in the segment list to any complex user-defined behavior. The IETF document describes how network instructions (functions) are inserted into an IPv6 packet header using a Segment Routing Header (SRH). By way of example, the 128-bit SRv6 SID (IPv6 Destination Address) is structured as including a locator having a common prefix locator (e.g., B bits) and unique suffix (L bits, sometimes referred to as a cSID). The locator indicates which node a packet is to be routed to in order to perform the function that is also included in the SID. The function may be any possible function having any optional argument. Generally, the length of the SID is fixed.

As illustrated, the SRH 200 includes a number of fields that increase the size of the data packet. In particular, the SRH 200 comprises a Next Header field 211, Hdr Ext Len field 213, Routing Type field 215, Segment Left (SL) field 220, Last Entry field 231, Flag field 235, and Tag field 237, and a list of segments 239.

The Next Header field 211 comprises an 8-bit selector. The Next Header field 211 is used to identify a type of header immediately following the SRH. The Hdr Ext Len field 213 comprises an 8-bit unsigned integer. The Hdr Ext Len field 213 is used to indicate a length of the routing header (RH) in 8-octet units, not including the first 8 octets. The Routing Type field 215 comprises an 8-bit identifier of a particular routing header variant. The SL field 220 comprises an 8-bit unsigned integer. The SL field 220 is used to identify a number of remaining segments in the list of segments 239 before reaching the final destination. The SL value is decremented at each segment. The Last Entry field 231 contains an index of the last element in a segment list.

The Flag field 235 comprises 8 bits of flags. In one embodiment, the Flag field 235 includes a C sub-field 240. The C sub-field 240 is used to indicate whether a next segment in order is a cSID or an SID. For example, the C value can be set to zero to indicate that the next segment is not a cSID (or rather, is an SID). When the C value is one, the next segment is a cSID in a cSID container 280.

The Tag field 237 is used to tag a packet associated with the SRH 200 as part of a class or group of packets. In one embodiment, the Tag field 237 includes a cSID pointer (cP) sub-field 260. The cP sub-field 260 is used for a pointer to an active (or next) cSID. In one embodiment, if a size and position of a cSID in the list of segments 239 are in bytes, nibbles, or bits, the size of cP sub-field 260 is 4, 5, or 7 bits, respectively. If a position of a cSID is represented in bytes, the last 4 bits of original 16-bit Tag field 237 is used as the cP sub-field 260. For example, the pointer would point to a first byte of active or next cSID in a segment indicated by the SL field 220. If the position of a cSID is represented in nibbles, the last 5 bits of original 16-bit Tag field 237 is used as the cP sub-field 260. In such a case, the pointer of the cP sub-field 260 would point to the first nibble of active or next cSID in the segment. On the other hand, if the position of a cSID is represented in bits, the last 7 bits of original 16-bit Tag field 237 is defined as the cP sub-field 260. The pointer of the cP sub-field 260 would point to the first bit of active or next cSID in the segment.

The list of segments 239 includes one or more segments. The segments are arranged in an order that reflects the path of the corresponding packet. Each segment (or Segment List[i]) is identifiable by the value of the SL field 220 (the SL value) as an index and has a size of 128 bits. A segment comprises one SID, or one or more cSIDs. As shown in FIG. 2, the list of segments 239 can include a container of (or a group of) cSIDs (i.e., Segment List [1] to [M] 280), as well as SIDs (i.e., Segment List [0], Segment List [M+1] to Segment List [k] 285). In another embodiment, the list of segments 239 can include only the cSIDs.

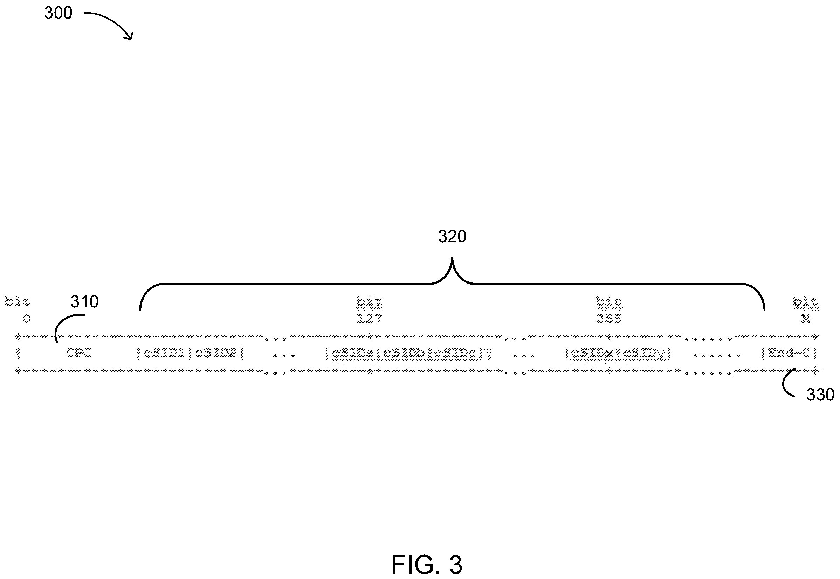

FIG. 3 illustrates a container of cSIDs (hereinafter, the container) 300. As shown in FIG. 3, the container 300 comprises a multiple (N) of 128 bits. The container 300 contains a common prefix for compression (CPC) 310, compressed SIDs (cSIDs) 320, and an end of container (End-c) 330. The CPC 310 is a common IPv6 prefix in a segment routing (SR) network domain. For example, the CPC 310 is consecutive common data units (i.e., B bits of common prefix in a locator) in certain group of SIDs. In one embodiment, the CPC 310 indicates the length L of the cSID. That is, the CPC 310 combined with a cSID 320 is the part of a SRv6 SID used to steer a packet and perform a function. The other part (i.e., the last 128 - B - L bits) of the SRv6 SID is not used.

At the end of the cSIDs, the container 300 contains the end of container (End-c) 330 after the last cSID for indicating the end of the container and/or the end of the compression. The End-c 330 has the same length (e.g., L bits) as that of a cSID. In one embodiment, the End-c 330 is all zeros of L bits, which is reserved for End-c 330. In another embodiment, the End-c 330 is all ones of L bits. In another embodiment, the first or last SID which is not compressed can be included in a list of segments before or after the container 300.

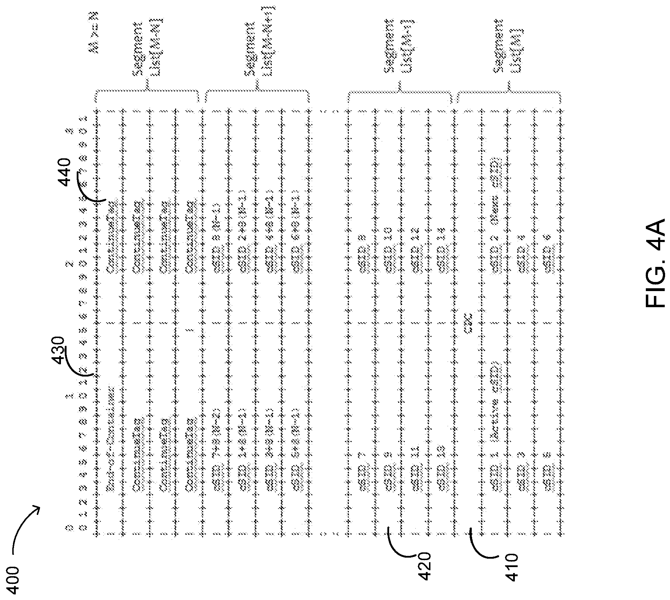

FIG. 4A illustrates a container of cSIDs (hereinafter, the container) 400 according to one embodiment. As shown in FIG. 4A, the container 400 comprises a multiple (N) of 128 bits. The container 400 contains a common prefix for compression (CPC) 410, compressed SIDs (cSIDs) 420, an end of container (End-c) 430, and a ContinueTag (or c-Tag for short) 440. In the embodiment, the ContinueTag 440 is a padding inserted after the End-c 430 in order to fill any empty spaces in the container 400. Each ContinueTag 440 has a length of the L bits. In one embodiment, c-Tag is all ones in all its L bits and End-c is all zeros in all its L bits. Details of CPC 410, cSID 420, and End-c 430 are described above with respect to FIG. 3.

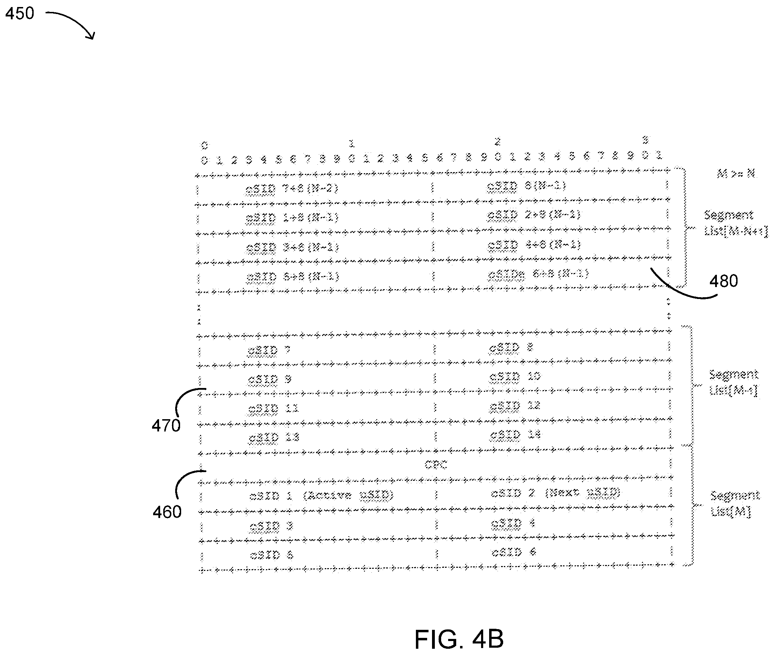

FIG. 4B illustrates a container of cSIDs (hereinafter, the container) 450 according to another embodiment. As shown in FIG. 4A, the container 400 comprises a multiple (N) of 128 bits. The container 450 contains a common prefix for compression (CPC) 460, compressed SIDs (cSIDs) 470, and an end of compression indicator cSID (cSIDe) 480. In the embodiment, the cSIDe 480 is used as both a cSID and an end of container (End-c; sometimes, also referred to as an end of compression). As an example, when a node generates cSIDs, the node can generate a cSIDe 480 that has the same role as any other cSIDs. On the other hand, the cSIDe 480 also works as an End-c. Using the cSIDe 480 can save network bandwidth because in some cases where cSIDs fully filled segments in the container 450, adding an extra segment to include an End-c in the container 450 can be avoided. Details of CPC 460 and cSID 470 are described above with respect to FIG. 3.

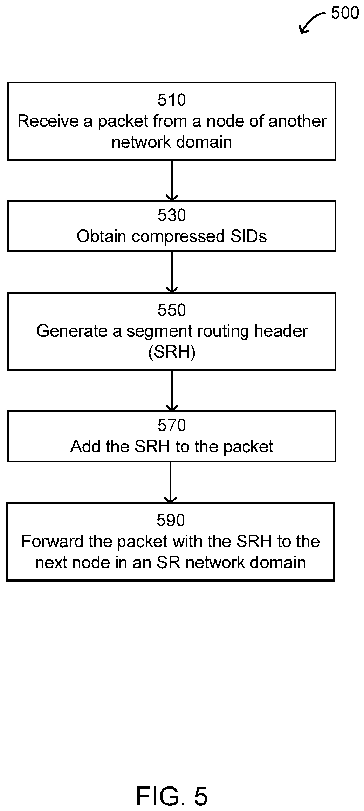

FIG. 5 is an embodiment of a method 500 of forwarding a packet implemented by a node in a segment routing (SR) network domain (e.g., an edge node 161, 167, or a border node 163). The method 500 improves the forwarding process by significantly reducing a size of a segment routing header that is to be attached to the packet. By having such a compact segment routing header, a transmission of the packet requires less network bandwidth and results in an efficient transmission.

In block 510, the node receives a packet from a node of another network domain. The packet is to pass through the SR network domain in accordance with segment identifiers (SIDs). In an embodiment, the node is an ingress node of the SR network domain. In another embodiment, the node is a border node of the SR network domain. The SR network domain is an SR over Internet Protocol version 6 (SRv6) data plane. An SID has a value of 128 bits. In an embodiment, an SID includes a locator, function, and arguments. When a segment routing policy for an explicit traffic engineering path is applied to steer the packet at an edge node (e.g., the ingress node) of the network domain, SIDs are generated and added to the packet to provide guidance to nodes in the network domain to navigate the packet through the path. In an embodiment, a group (or some) of the SIDs have a number (e.g., B bits) of common consecutive data units (e.g., CPC 310 in a byte, nibble, or bit). A group of SIDs can have a common prefix of B bits in the locator. That is, the group of SIDs has a unique suffix (i.e., rest of the locator) of L bits in the locator. Moreover, the group of SIDs can also include R bits of common function and arguments. Accordingly, an SID in the group comprises B bits of the common prefix, L bits of the unique suffix, and R bits of the common function and arguments in order. In an embodiment, the group of SIDs can have at least one of the common function or arguments.

In block 530, the node obtains compressed SIDs (cSIDs) corresponding to the group of the SIDs (that have the common prefix of B bits in the locator). A cSID comprises unique consecutive data units (e.g., bits) of a corresponding SID. For example, a cSID is the unique suffix of the locator having a value of L bits.

In one embodiment, in order to determine the cSIDs, the node obtains the SIDs for the packet in accordance with an SR policy of the SR network domain. The node can identify the group of SIDs having the common prefix of B bits in the locator. In an embodiment, the node can identify the group of SIDs based on a binding SID. Once the group of SIDs is determined, the node extracts the unique suffix in a respective SID as a cSID for each SID in the group. In an embodiment, an SID has a size or length of 128 bits. In such a case, a corresponding cSID has a size that is less than 128 bits (e.g., 128 bits minus the B bits of the common prefix and the R bits of the common function and arguments).

In another embodiment, at block 510, the node can receive the cSIDs from another node either in the same or different network domain. As such, in order to determine the cSIDs at block 530, the node extracts the cSIDs from the packet with the cSIDs.

In block 550, the node generates a segment routing header (SRH). As illustrated in FIG. 2, the SRH has several fields. In an embodiment, the node creates an SRH that has a flag field 235 with a first sub-field (indicated by a C sub-field 240 in FIG. 2), a tag field 237 with a second sub-field (indicated by a cP sub-field 260 in FIG. 2), and a list of segments 239 (indicated by Segment List [0] to [k] in FIG. 2). In an embodiment, the flag field 235 and tag field 237 do not include any other sub-fields.

The SIDs and cSIDs in the list of segments are arranged in an order that reflects the path of the packet. Accordingly, each segment includes one SID, or one or more cSIDs, such as a part of (e.g., a cSID) or whole SID. The segments include the rest of the SIDs that do not belong to the group and a container of the cSIDs. In one embodiment, the container has a length greater than 128 bits and further comprises the common consecutive data units (e.g., the locator of B bits) for the group of the SIDs, cSIDs, and an end of compression indicator. The end of compression indicator has a preset value and is attached to an end of the cSIDs.

In one embodiment, the end of compression indicator can be an end of container (End-c) 430 as illustrated in FIG. 4A. The End-c 430 indicates that there are no more cSIDs. The End-c 430 is the same length as a cSID (i.e., the length of the unique suffix in the locator of the group of SIDs). The End-c 430 can be all zeroes or ones depending on a predefined setting. In another embodiment, the end of compression indicator can be a special cSID (e.g., cSIDe 480 in FIG. 4B), which is the last cSID in order. The cSIDe 480 acts as both an cSID for providing the unique L bits as well as indicating that there are no more cSID to be processed. In an embodiment, the container further comprises one or more paddings (e.g., ContinueTag 430 as illustrated in FIG. 4A) that are inserted after the end of container indicator to fill any empty space in the container. Each padding has a length of the L bits.

Once the SRH is created, the node inserts a value into the C sub-field 240 of the flag field 235 in the SRH 200. The value of the C sub-field 240 indicates whether a next segment in order is a cSID or an SID. The node also sets a value of the cP sub-field 260. In one embodiment, the node determines a pointer that points to an initial cSID (i.e., a first cSID in order) in the list of segments. The pointer can be a numerical value (e.g., 0) that indicates a location of a first data unit (e.g., a first bit) of a cSID. Subsequently, the node inserts the pointer into the cP sub-field 260. For example, the node can insert '0'as the pointer to the initial cSID into the cP sub-field 260 in the tag field 237 of the SRH 200. As such, the cP sub-field 260 in the tag field 237 comprises a pointer to one of the cSIDs.

In block 570, the node adds or pushes the SRH 200 to the packet 175. In one embodiment, the node also generates an internet protocol (IP) header 181 and adds the IP header 181 as an outer header to the packet 175 with the SRH 200 in such a way to encapsulate both the packet 175 and the SRH 200. In one embodiment, the IP header 181 is an IP version 6 (IPv6) header. In another embodiment, the IP header 181 is an IP version 4 (IPv4) header. The IP header 181 has a destination address (DA) that indicates an address of a node in the SR network domain 162, 164 where the packet is to be passed on next. A node address is represented by an SID. Accordingly, the DA is also composed of the locator, function, and arguments. The node determines an address of the next node in order based on the list of segments. The address of the next node corresponds to the next SID in the list of segments. The next SID may be represented by the cSID. In such a case, the node can construct an SID based on the cSID. That is, the node can prepend the common prefix of the locator to the cSID and append the common function and arguments to the cSID. The node then copies the constructed address or SID of the next node to the DA. In one embodiment, the node copies the cSID to the portion of the DA, which follows the common prefix in the DA when the DA contains the common prefix, wherein the common function and arguments in the DA have no use. When the node is a border node 163, there is no need to generate the IP header 181. In block 590, the node forwards the packet with the SRH to the next node in the SR network domain 162, 164. In one embodiment, the packet is forwarded in accordance with the DA in the IP header that is sent with the packet.

A transit node (e.g., the transit node 165, 166) can receive the packet with the SRH 200 and the IP header 181. In an embodiment, the transit node 165, 166 can receive the packet whose DA in the IP header 181 is a local END SID. The END SID indicates that the SRH includes a container containing cSIDs, wherein each of cSIDs is of L bits. In an embodiment, a common prefix in the container (e.g., in the current segment of 128 bits) is followed by a first cSID of L bits, which is in turn followed by a second cSID of L bits. In one embodiment, the transit node 165, 166 determines whether the current segment of 128 bits indicates the end of cSIDs or contains an active/next cSID, wherein the current segment indicates the end of cSIDs means that an End-c follows the first cSID in the current segment (i.e., the second cSID following the first cSID in the current segment is an End-c, wherein an End-c is a special cSID), the current segment contains an active/next cSID means that a cSID following the first cSID in the current segment is not an End-c (i.e., the second cSID following the first cSID in the current segment is not an End-c, wherein an End-c is a special cSID). In response to determining that the current segment of 128 bits indicates the end of cSIDs (i.e., the End-c follows the first cSID in the current segment) , the transit node 165, 166 copies the next segment of 128 bits to the DA. That is, the transit node 165, 166 decrements the SL value by one, copies the segment of 128 bits indicated by the SL value to the DA, and forwards the packet to a node indicated by the DA.

In response to determining that the current segment of 128 bits contains an active/next cSID (i.e., the second cSID in the current segment is not an End-c), the transit node does the following. First, the transit node shifts the cSIDs (including End-c and c-Tags, which are special cSIDs) in the current segment to the left by L bits, starting from the second cSID in the current segment (e.g., copying the second cSID to the place of the first cSID, copying the third cSID to the place of the second cSID, and so on, until the last cSID has been copied to the place of the second-to-last cSID in the current segment of 128 bits). The transit node then copies the first cSID of L bits in the next segment of 128 bits (which is indicated by the SL value minus one) to the place of the last cSID in the current segment of 128 bits. Next, the transit node copies the current segment of 128 bits (which is indicated by the SL value) to the DA, or copies the first cSID of L bits following the common prefix in the container (i.e., in the current segment of 128 bits) to the cSID of the DA, which follows the common prefix in the DA. The transit node then determines whether the second cSID of L bits following the first cSID in the next segment is a c-Tag. In response to determining that the second cSID is the c-Tag, which indicates that the next segment is full of c-Tags except for the first cSID, the transit node removes the next segment by copying the current segment to the next segment and decrementing the SL value by one. In response to determining that the second cSID is not the c-Tag, the transit node shifts the rest of the cSIDs (including End-c and c-Tags as special cSIDs) in the next segment left by L bits (e.g., copying the second cSID to the place of the first cSID, copying the third cSID to the place of the second cSID, and so on, until the last cSID has been copied to the place of the second-to-last cSID in the next segment of 128 bits). The transit node then copies a c-Tag to the place of the last cSID in the next segment of 128 bits. Thereafter, the transit node forwards the packet to a node indicated by the DA.

In an embodiment, the transit node 165, 166 identifies a value of the C sub-field 240. If the C sub-field 240 value is zero, then the transit node converts an SL value to identify segments in terms of L bits and also updates the C sub-field 240 value to a nonzero value. The transit node determines whether the next segment in terms of L bits is an End-c by decrementing the SL value by one and checking the segment indicated by the SL value. In response to determining that the next segment is the End-c, the transit node converts the SL value to identify segments in terms of 128 bits, updates the C sub-field 250 value to a zero value, copies the segment of 128 bits indicated by the SL value to the DA, and forwards the packet to a node indicated by the DA. In response to determining that the next segment is not an End-c but a cSID, the transit node copies the cSID (i.e., the segment of L bits indicated by the SL value) to the portion of the DA following the common prefix and forwards the packet to a node indicated by the DA.

In an embodiment, where the SRH 200 comprises the C sub-field 240 and the cP sub-field 260, the transit node 165, 166 uses and updates the C value and the cP value. The transit node sets the C sub-field 240 value to one and the cP sub-field 260 value to B data units (such as bits) when the C sub-field 240 value in the packet with the SRH received is zero. The transit node determines whether the cP sub-field 260 value indicates the last cSID in the current segment of 128 bits, where the current segment is indicated by the SL value. In response to determining that the cP sub-field 260 value indicates the last cSID in the current segment, the transit node 165, 166 decrements the SL value by one to make the next segment of 128 bits become the current segment of 128 bits, and sets the cP sub-field 260 value to zero, which indicates the first cSID in the current segment. In response to determining that the cP sub-field 260 value does not indicate the last cSID in the current segment, the transit node 165, 166 updates the cP sub-field 260 value to indicate the next cSID (i.e., the updated cP sub-field 260 value indicates the next cSID) by incrementing the cP sub-field 260 value by L data units (such as bits). The transit node 165, 166 checks if the next cSID is an End-c. If the next cSID is the End-c, the transit node 165, 166 sets the C sub-field 240 value and cP sub-field 260 value to zeros, copies the next segment of 128 bits to the DA by decrementing the SL value by one, copies the segment of 128 bits indicated by the updated SL value to the DA, and forwards the packet to a node indicated by the DA. If the next cSID is not an End-c, the transit node 165, 166 copies the next cSID to the portion of the DA following the common prefix and forwards the packet to a node indicated by the DA.

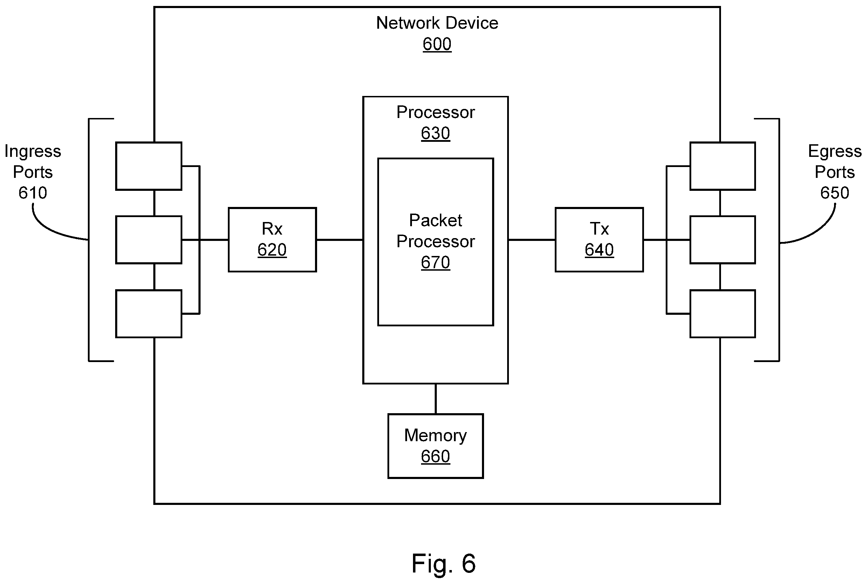

FIG. 6 is a schematic diagram of a node 600 in a segment routing (SR) network domain (e.g., an edge node 161, 167, a transit node 165, 166, or a border node 163) according to an embodiment of the disclosure. The node 600 is suitable for implementing the disclosed embodiments as described herein. The node 600 comprises ingress ports 610 and receiver units (Rx) 620 for receiving data; a processor, logic unit, or central processing unit (CPU) 630 to process the data; transmitter units (Tx) 640 and egress ports 650 for transmitting the data; and a memory 660 for storing the data. The node 600 may also comprise optical-to-electrical (OE) components and electrical-to-optical (EO) components coupled to the ingress ports 610, the receiver units 620, the transmitter units 640, and the egress ports 650 for egress or ingress of optical or electrical signals.

The processor 630 is implemented by hardware and software. The processor 630 may be implemented as one or more CPU chips, cores (e.g., as a multi-core processor), field-programmable gate arrays (FPGAs), application specific integrated circuits (ASICs), and digital signal processors (DSPs). The processor 630 is in communication with the ingress ports 610, receiver units 620, transmitter units 640, egress ports 650, and memory 660. The processor 630 comprises a packet processor 670. The packet processor 670 implements the disclosed embodiments described above. For instance, the packet processor 670 implements, generates, processes, prepares, or provides the various packet processing functions. The inclusion of the packet processor 670 therefore provides a substantial improvement to the functionality of the node 600 and effects a transformation of the node 600 to a different state. Alternatively, the packet processor 670 is implemented as instructions stored in the memory 660 and executed by the processor 630.

The memory 660 comprises one or more disks, tape drives, and solid-state drives and may be used as an over-flow data storage device, to store programs when such programs are selected for execution, and to store instructions and data that are read during program execution. The memory 660 may be volatile and/or non-volatile and may be read-only memory (ROM), random access memory (RAM), ternary content-addressable memory (TCAM), and/or static random-access memory (SRAM).

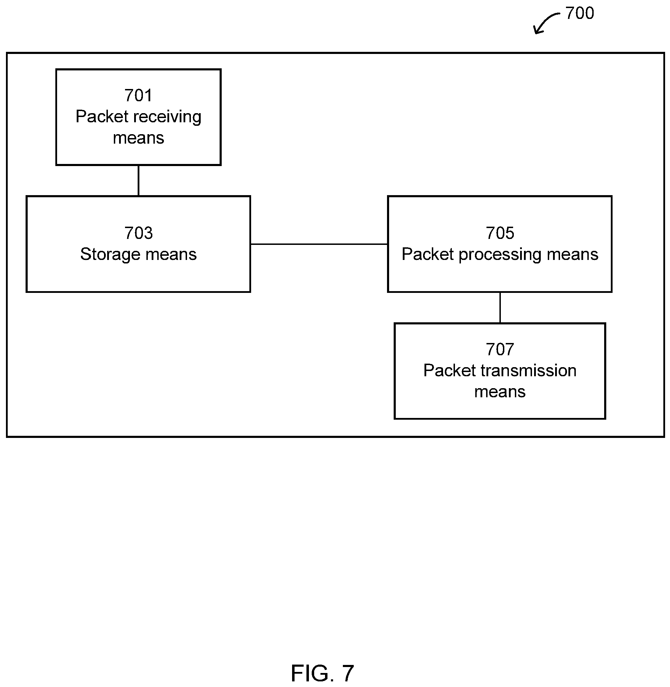

FIG. 7 is a schematic diagram of an embodiment of a means for forwarding a packet 700 in a segment routing (SR) network domain. In an embodiment, the means for forwarding a packet 700 is implemented in a node (e.g., an edge node 161, 167, transit node 165, 166, or a border node 163). The means for forwarding a packet 700 includes a packet receiving means 701. The packet receiving means 701 is configured to receive a packet (sometimes, an encapsulated packet) from a node. The means for forwarding a packet 700 includes a packet transmission means 707 coupled to the packet receiving means 701. The packet transmission means 707 is configured to transmit the packet to another node.

The means for forwarding a packet 700 includes a packet processing means 705. The packet processing means 705 is coupled to at least one of the packet receiving means 701 or the packet transmission means 707.

The means for forwarding a packet 700 includes a storage means 703. The storage means 703 is coupled to at least one of the packet receiving means 701 or the packet transmission means 707. The storage means 703 is configured to store instructions. The means for forwarding a packet 700 also includes packet processing means 705. The packet processing means 705 is coupled to the storage means 703. The packet processing means 705 is configured to execute the instructions stored in the storage means 703 to perform the methods disclosed herein.

It should also be understood that the steps of the exemplary methods set forth herein are not necessarily required to be performed in the order described, and the order of the steps of such methods should be understood to be merely exemplary. Likewise, additional steps may be included in such methods, and certain steps may be omitted or combined, in methods consistent with various embodiments of the present disclosure.

While several embodiments have been provided in the present disclosure, it should be understood that the disclosed systems and methods might be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

## Claims

1. A method (500) implemented by a first node in a segment routing, SR, network domain comprising:
receiving (510), by the first node from a second node of another network domain, a packet (170) configured to pass through the SR network domain in accordance with segment identifiers, SIDs, wherein a group of the SIDs have a first number of common consecutive data units;
obtaining (530), by the first node, compressed SIDs cSIDs corresponding to the group of the SIDs, wherein each cSID comprises unique consecutive data units of a corresponding SID, and wherein the unique consecutive data units correspond to a second number of data units;
generating (550), by the first node, a segment routing header, SRH, having a list of segments, wherein the list of segments comprises segments in order, wherein the segments include the SIDs that do not belong to the group and a container of the cSIDs, wherein the container has a length greater than 128 bits and further comprises the common consecutive data units for the group of the SIDs and an end of compression indicator that has a preset value, wherein the end of compression indicator is attached to an end of the cSIDs;
adding (570), by the first node, the SRH to the packet (170); and
forwarding (590), by the first node, the packet (170) with the SRH to a third node in the SR network domain; and **characterized in that**
the end of compression indicator corresponds to one of a) a number of zeroes or ones having a length of the second number of data units and b) a last cSID in order.

2. The method (500) of claim 1, wherein the container further comprises one or more paddings that are inserted after the end of compression indicator to fill an empty space in the container, wherein each padding has a length of the second number of data units.

3. The method (500) of any preceding claims, wherein obtaining (530) the cSIDs further comprises:
generating the SIDs in accordance with an SR policy of the SR network domain; and
extracting, for each of the group of the SIDs, the unique consecutive data units in a respective SID as a cSID.

4. The method (500) of any preceding claims, further comprising receiving the cSIDs, and wherein determining the cSIDs comprises identifying the received cSIDs.

5. The method (500) of any preceding claims, wherein the first node is an ingress node or a border node of the SR network domain.

6. A method implemented by a first node in a segment routing, SR, network domain comprising:
receiving, by the first node from a second node of the SR network domain, a packet (170) with an internet protocol, IP, header and a segment routing header, SRH, wherein the packet (170) is configured to pass through the SR network domain in accordance with segment identifiers, SIDs, wherein a group of the SIDs have a first number of common consecutive data units, wherein the IP header includes a destination address, DA, for the packet (170), wherein the SRH comprises a list of segments and a segment left, SL, field, wherein the list of segments comprises segments in order, wherein the segments include the SIDs that do not belong to the group and a container of compressed SIDs, cSIDs, wherein the container has a length greater than 128 bits and further comprises a common consecutive prefix of a first number of data units for the group of the SIDs and an end of compression indicator, End-c, wherein each of the cSIDs comprises unique consecutive data units of a corresponding SID, and wherein the unique consecutive data units correspond to a second number of data units;
updating, by the first node, a portion of the DA in the IP header with one of the cSIDs in accordance with the order; and
forwarding, by the first node, the packet (170) with the IP header and the SRH to a third node of the SR network domain in accordance with the updated DA;.
and wherein a common prefix in the container is followed by a first cSID of data units, which is in turn followed by a second cSID of the data units,
and wherein the method is **characterized by** comprising
determining whether the second cSID is not an End-c.

7. The method of claim 6, further comprising copying the second cSID to the portion of the DA in response to determining the second cSID is not an End-c, wherein the portion follows the common prefix of the first number of common consecutive data units in the DA.

8. The method of claim 7, further comprising shifting the cSIDs in the current segment left by the second number of data units starting from the second cSID in the current segment, copying the first cSID of the second number of data units in a next segment to the place of the last cSID of the second number of data units in the current segment, and copying the first cSID in the current segment to the portion of the DA.

9. The method of claim 8, wherein the next segment is indicated by the SL value minus one, and wherein the first cSID of the second number of data units is leftmost in the next segment.

10. The method of any of claims 8-9, further comprising determining whether the second cSID of the second number of data units in the next segment is a c-Tag, wherein the second cSID follows the first cSID in the next segment.

11. The method of claim 10, wherein the c-Tag corresponds to a number of ones having a length of the second number of data units and the End-c corresponds to a number of zeroes having a length of the second number of data units, or wherein the c-Tag corresponds to a number of zeros having a length of the second number of data units and the End-c corresponds to a number of ones having a length of the second number of data units.

12. The method of any of claims 10-11, further comprising removing the next segment by copying the current segment to the next segment and decrementing the SL value by one when the second cSID is determined to be the c-Tag.

13. The method of claims 11 and 12, further comprising shifting the cSIDs left by the second number of data units starting from the second cSID in the next segment when the second cSID is determined to not be the c-Tag, and copying the c-Tag to the place of the last cSID in the next segment.

14. The method of any preceding claims, wherein the first node is a transit node of the SR network domain.

15. The method of any preceding claims, wherein a data unit is a byte, a nibble or a bit.

16. A node device (600), comprising:
a receiver (620) configured to receive a packet (170);
a transmitter (640) configured to transmit the packet (170);
a memory (660) coupled to the receiver (620) and the transmitter (640), the memory (660) storing instructions; and
a processor (630) coupled to the memory (660), wherein the processor (630) is configured to execute the instructions to cause the node device to carry out the method of any of claims 1 to 15.

17. A system, comprising:
a first node; and
a second node in communication with the first node device, wherein the first node or the second node is configured to perform the method of any of claims 1 to 15.

18. An apparatus comprising means (700) for forwarding a packet (170) in a segment routing (SR) network domain, comprising:
a packet receiving means (710) configured to receive the packet (170) to process;
a packet transmission means (707) coupled to the packet receiving means (710), wherein the packet transmission means (707) is configured to forward the packet (170) to another node;
a storage means (703) coupled to at least one of the packet receiving means (710) or the packet transmission means (707), wherein the storage means (703) is configured to store instructions; and
a packet processing means (705) coupled to the storage means (703), wherein the packet processing means (705) is configured to execute the instructions stored in the storage means (703) to perform the method of any of claims 1 to 15.

## Patentansprüche

1. Verfahren (500), das durch einen ersten Knoten in einer Segment-Routing(SR)-Netzwerkdomäne implementiert wird und Folgendes umfasst:
Empfangen (510) eines Pakets (170), das dazu konfiguriert ist, die SR-Netzwerkdomäne gemäß Segmentkennungen (SIDs) zu durchlaufen, durch den ersten Knoten von einem zweiten Knoten einer anderen Netzwerkdomäne, wobei eine Gruppe der SIDs eine erste Anzahl von gemeinsamen aufeinanderfolgenden Dateneinheiten aufweist;
Erlangen (530) von komprimierten SIDs (cSIDs), die der Gruppe der SIDs entsprechen, durch den ersten Knoten, wobei jede cSID eindeutige aufeinanderfolgende Dateneinheiten einer entsprechenden SID umfasst und wobei die eindeutigen aufeinanderfolgenden Dateneinheiten einer zweiten Anzahl von Dateneinheiten entsprechen;
Erzeugen (550) eines Segment-Routing-Headers (SRH) mit einer Liste von Segmenten durch den ersten Knoten, wobei die Liste von Segmenten die Segmente in Reihenfolge enthält, wobei die Segmente die SIDs, die nicht zu der Gruppe gehören, und einen Container der cSIDs enthalten, wobei der Container eine Länge von mehr als 128 Bit hat und ferner die gemeinsamen aufeinanderfolgenden Dateneinheiten für die Gruppe der SIDs und einen Indikator für das Ende der Komprimierung umfasst, der einen voreingestellten Wert hat, wobei der Indikator für das Ende der Komprimierung an ein Ende der cSIDs angehängt ist;
Hinzufügen (570) des SRH zu dem Paket (170) durch den ersten Knoten; und Weiterleiten (590) des Paket (170) mit dem SRH durch den ersten Knoten an einen dritten Knoten in der SR-Netzwerkdomäne; und **dadurch gekennzeichnet, dass** der Indikator für das Ende der Komprimierung einem von a) einer Anzahl von Nullen oder Einsen mit einer Länge der zweiten Anzahl von Dateneinheiten oder b) einer letzten cSID in Reihenfolge entspricht.

2. Verfahren (500) nach Anspruch 1, wobei der Container ferner eine oder mehrere Auffüllungen umfasst, die nach dem Indikator für das Ende der Komprimierung eingefügt sind, um einen leeren Raum in dem Container zu füllen, wobei jede Auffüllung eine Länge der zweiten Anzahl von Dateneinheiten aufweist.

3. Verfahren (500) nach einem der vorstehenden Ansprüche, wobei das Erlangen (530) der cSIDs ferner Folgendes umfasst:
Erzeugen der SIDs in Übereinstimmung mit einer SR-Richtlinie der SR-Netzwerkdomäne; und
Extrahieren der eindeutigen aufeinanderfolgenden Dateneinheiten in einer jeweiligen SID als cSID bei jeder der Gruppe der SIDs.

4. Verfahren (500) nach einem der vorstehenden Ansprüche, das ferner das Empfangen der cSIDs umfasst, wobei das Bestimmen der cSIDs das Identifizieren der empfangenen cSIDs umfasst.

5. Verfahren (500) nach einem der vorstehenden Ansprüche, wobei der erste Knoten ein Eintrittsknoten oder ein Randknoten der SR-Netzwerkdomäne ist.

6. Verfahren, das durch einen ersten Knoten in einer Segment-Routing(SR)-Netzwerkdomäne implementiert wird, das Folgendes umfasst:
Empfangen eines Pakets (170) mit einem Internetprotokoll(IP)-Header und einem Segment-Routing-Header (SRH) durch den ersten Knoten von einem zweiten Knoten der SR-Netzwerkdomäne, wobei das Paket (170) dazu konfiguriert ist, die SR-Netzwerkdomäne gemäß Segmentkennungen (SIDs) zu durchlaufen, wobei eine Gruppe der SIDs eine erste Anzahl von gemeinsamen aufeinanderfolgenden Dateneinheiten aufweist, wobei der IP-Header eine Zieladresse (DA) für das Paket (170) enthält, wobei der SRH eine Liste von Segmenten und ein Segment-Links(SL)-Feld umfasst, wobei die Liste von Segmenten Segmente in Reihenfolge umfasst, wobei die Segmente die SIDs, die nicht zu der Gruppe gehören, und einen Container von komprimierten SIDs (cSIDs) enthalten, wobei der Container eine Länge von mehr als 128 Bit hat und ferner ein gemeinsames aufeinanderfolgendes Präfix einer ersten Anzahl von Dateneinheiten für die Gruppe der SIDs und einen Indikator für das Ende der Komprimierung (End-c) umfasst, wobei jede der cSIDs eindeutige aufeinanderfolgende Dateneinheiten einer entsprechenden SID umfasst und wobei die eindeutigen aufeinanderfolgenden Dateneinheiten einer zweiten Anzahl von Dateneinheiten entsprechen;
Aktualisieren eines Teils der DA in dem IP-Header mit einer der cSIDs gemäß der Reihenfolge durch den ersten Knoten; und
Weiterleiten des Pakets (170) mit dem IP-Header und dem SRH durch den ersten Knoten an einen dritten Knoten der SR-Netzwerkdomäne gemäß der aktualisierten DA;
und wobei einem gemeinsamen Präfix in dem Container eine erste cSID von Dateneinheiten folgt, auf die wiederum eine zweite cSID der Dateneinheiten folgt, und wobei das Verfahren **dadurch gekennzeichnet ist, dass** es Folgendes umfasst: Bestimmen, ob es sich bei der zweiten cSID nicht um ein End-c handelt.

7. Verfahren nach Anspruch 6, das ferner das Kopieren der zweiten cSID in den Teil der DA als Reaktion auf das Bestimmen, dass es sich bei der zweiten cSID nicht um ein End-c handelt, umfasst, wobei der Teil dem gemeinsamen Präfix der ersten Anzahl von gemeinsamen aufeinanderfolgenden Dateneinheiten in der DA folgt.

8. Verfahren nach Anspruch 7, das ferner das Verschieben der cSIDs in dem aktuellen Segment um die zweite Anzahl von Dateneinheiten nach links, beginnend mit der zweiten cSID in dem aktuellen Segment, das Kopieren der ersten cSID der zweiten Anzahl von Dateneinheiten in einem nächsten Segment an die Stelle der letzten cSID der zweiten Anzahl von Dateneinheiten in dem aktuellen Segment und das Kopieren der ersten cSID in dem aktuellen Segment in den Teil der DA umfasst.

9. Verfahren nach Anspruch 8, wobei das nächste Segment durch den SL-Wert minus eins angegeben wird und wobei die erste cSID der zweiten Anzahl von Dateneinheiten im nächsten Segment ganz links steht.

10. Verfahren nach einem der Ansprüche 8 bis 9, das ferner das Bestimmen, ob es sich bei der zweiten cSID der zweiten Anzahl von Dateneinheiten in dem nächsten Segment um ein c-Tag handelt, umfasst, wobei die zweite cSID in dem nächsten Segment auf die erste cSID folgt.

11. Verfahren nach Anspruch 10, wobei das c-Tag einer Anzahl von Einsen mit einer Länge der zweiten Anzahl von Dateneinheiten entspricht und das End-c einer Anzahl von Nullen mit einer Länge der zweiten Anzahl von Dateneinheiten entspricht oder wobei das c-Tag einer Anzahl von Nullen mit einer Länge der zweiten Anzahl von Dateneinheiten entspricht und das End-c einer Anzahl von Einsen mit einer Länge der zweiten Anzahl von Dateneinheiten entspricht.

12. Verfahren nach einem der Ansprüche 10 bis 11, das, wenn die zweite cSID als das c-Tag bestimmt wird, ferner das Entfernen des nächsten Segments durch Kopieren des aktuellen Segments in das nächste Segment und das Dekrementieren des SL-Werts um eins umfasst.

13. Verfahren nach den Ansprüchen 11 und 12, das ferner das Verschieben der cSIDs um die zweite Anzahl von Dateneinheiten nach links, beginnend mit der zweiten cSID in dem nächsten Segment, wenn bestimmt wird, dass es sich bei der zweiten cSID nicht um das c-Tag ist, und das Kopieren des c-Tags an die Stelle der letzten cSID in dem nächsten Segment umfasst.

14. Verfahren nach einem der vorstehenden Ansprüche, wobei der erste Knoten ein Transitknoten der SR-Netzwerkdomäne ist.

15. Verfahren nach einem der vorstehenden Ansprüche, wobei eine Dateneinheit ein Byte, ein Nibble oder ein Bit ist.

16. Knotenvorrichtung (600), die umfasst:
einen Empfänger (620), der zum Empfangen eines Pakets (170) konfiguriert ist;
einen Sender (640), der zum Übertragen des Pakets (170) konfiguriert ist;
einen mit dem Empfänger (620) und dem Sender (640) gekoppelten Speicher (660), wobei in dem Speicher (660) Anweisungen abgespeichert sind; und
einen mit dem Speicher (660) gekoppelten Prozessor (630), wobei der Prozessor (630) dazu
konfiguriert ist, Anweisungen derart auszuführen, dass die Knotenvorrichtung dazu veranlasst wird, das Verfahren nach einem der Ansprüche 1 bis 15 durchzuführen.

17. System, das umfasst:
einen ersten Knoten; und
einen zweiten Knoten, der mit der ersten Knotenvorrichtung in Kommunikation steht, wobei der erste Knoten oder der zweite Knoten zum Durchführen des Verfahrens nach einem der Ansprüche 1 bis 15 konfiguriert ist.

18. Einrichtung, die Mittel (700) zum Weiterleiten eines Pakets (170) in einer Segment-Routing(SR)-Netzwerkdomäne umfasst, die umfassen:
ein Paketempfangsmittel (710), das zum Empfangen des zu verarbeitenden Pakets (170) konfiguriert ist;
ein mit dem Paketempfangsmittel (710) gekoppeltes Paketübertragungsmittel (707), wobei das Paketübertragungsmittel (707) zum Weiterleiten des Pakets (170) an einen anderen Knoten konfiguriert ist;
ein mit mindestens einem von dem Paketempfangsmittel (710) oder dem Paketübertragungsmittel (707) gekoppeltes Speichermittel (703), wobei das Speichermittel (703) zum Speichern von Anweisungen konfiguriert ist; und
eine mit dem Speichermittel (703) gekoppeltes Paketverarbeitungsmittel (705), wobei das Paketverarbeitungsmittel (705) dazu konfiguriert ist, die in dem Speichermittel (703) gespeicherten Anweisungen auszuführen, sodass das Verfahren nach einem der Ansprüche 1 bis 15 durchgeführt wird.

## Revendications

1. Procédé (500) mis en œuvre par un premier nœud dans un domaine de réseau de routage de segment, SR, comprenant :
la réception (510), par le premier nœud à partir d'un deuxième nœud d'un autre domaine de réseau, d'un paquet (170) configuré pour passer par le domaine de réseau SR conformément à des identifiants de segment, SID, dans lequel un groupe de SID a un premier nombre d'unités de données consécutives communes ;
l'obtention (530), par le premier nœud, de SID comprimés cSID correspondant au groupe de SID, dans lequel chaque cSID comprend des unités de données consécutives uniques d'un SID correspondant, et dans lequel les unités de données consécutives uniques correspondent à un second nombre d'unités de données ;
la génération (550), par le premier nœud, d'un en-tête de routage de segment, SRH, ayant une liste de segments, dans lequel la liste de segments comprend des segments dans l'ordre, dans lequel les segments comportent les SID qui n'appartiennent pas au groupe et un conteneur de cSID, dans lequel le conteneur a une longueur supérieure à 128 bits et comprend en outre les unités de données consécutives communes pour le groupe de SID et un indicateur de fin de compression qui a une valeur prédéfinie, dans lequel l'indicateur de fin de compression est attaché à une extrémité des cSID ;
l'ajout (570), par le premier nœud, du SRH au paquet (170) ; et
le transfert (590), par le premier nœud, du paquet (170) avec le SRH à un troisième nœud dans le domaine de réseau SR ; et **caractérisé en ce que**
l'indicateur de fin de compression correspond à l'un parmi a) un nombre de zéros ou de uns ayant une longueur du second nombre d'unités de données et b) un dernier cSID dans l'ordre.

2. Procédé (500) selon la revendication 1, dans lequel le conteneur comprend en outre un ou plusieurs remplissages qui sont insérés après l'indicateur de fin de compression pour remplir un espace vide dans le conteneur, dans lequel chaque remplissage a une longueur du second nombre d'unités de données.

3. Procédé (500) selon l'une quelconque des revendications précédentes, dans lequel l'obtention (530) des cSID comprend en outre :
la génération des SID conformément à une politique SR du domaine de réseau SR ; et
l'extraction, pour chaque SID du groupe de SID, des unités de données consécutives uniques dans un SID respectif en tant que cSID.

4. Procédé (500) selon l'une quelconque des revendications précédentes, comprenant en outre la réception des cSID, et dans lequel la détermination des cSID comprend l'identification des cSID reçus.

5. Procédé (500) selon l'une quelconque des revendications précédentes, dans lequel le premier nœud est un nœud d'entrée ou un nœud de bordure du domaine de réseau SR.

6. Procédé mis en œuvre par un premier nœud dans un domaine de réseau de routage de segment, SR, comprenant :
la réception, par le premier nœud à partir d'un deuxième nœud du domaine de réseau SR, d'un paquet (170) avec un en-tête de protocole Internet, IP, et un en-tête de routage de segment, SRH, dans lequel le paquet (170) est configuré pour passer par le domaine de réseau SR conformément à des identifiants de segment, SID, dans lequel un groupe de SID a un premier nombre d'unités de données consécutives communes, dans lequel l'en-tête IP comporte une adresse de destination, DA, pour le paquet (170), dans lequel le SRH comprend une liste de segments et un champ gauche de segment, SL, dans lequel la liste de segments comprend des segments dans l'ordre, dans lequel les segments comportent les SID qui n'appartiennent pas au groupe et un conteneur de SID compressés, cSID, dans lequel le conteneur a une longueur supérieure à 128 bits et comprend en outre un préfixe consécutif commun d'un premier nombre d'unités de données pour le groupe de SID et un indicateur de fin de compression, End-c, dans lequel chacun des cSID comprend des unités de données consécutives uniques d'un SID correspondant, et dans lequel les unités de données consécutives uniques correspondent à un second nombre d'unités de données ;
la mise à jour, par le premier nœud, d'une partie de la DA dans l'en-tête IP avec l'un des cSID conformément à l'ordre ; et
le transfert, par le premier nœud, du paquet (170) avec l'en-tête IP et le SRH à un troisième nœud du domaine de réseau SR conformément à la DA mise à jour ;.
et dans lequel un préfixe commun dans le conteneur est suivi d'un premier cSID d'unités de données, qui est lui-même suivi d'un second cSID des unités de données, et dans lequel le procédé est **caractérisé par** le fait de comprendre
le fait de déterminer si le second cSID n'est pas un End-c.

7. Procédé selon la revendication 6, comprenant en outre la copie du second cSID dans la partie de la DA en réponse au fait de déterminer que le second cSID n'est pas un End-c, dans lequel la partie suit le préfixe commun du premier nombre d'unités de données consécutives communes dans la DA.

8. Procédé selon la revendication 7, comprenant en outre le décalage des cSID dans le segment actuel vers la gauche par le second nombre d'unités de données à partir du second cSID dans le segment actuel, la copie du premier cSID du second nombre d'unités de données dans un segment suivant à la place du dernier cSID du second nombre d'unités de données dans le segment actuel, et la copie du premier cSID dans le segment actuel dans la partie de la DA.

9. Procédé selon la revendication 8, dans lequel le segment suivant est indiqué par la valeur SL moins un, et dans lequel le premier cSID du second nombre d'unités de données est le plus à gauche dans le segment suivant.

10. Procédé selon l'une quelconque des revendications 8 à 9, comprenant en outre le fait de déterminer si le second cSID du second nombre d'unités de données dans le segment suivant est un c-Tag, dans lequel le second cSID suit le premier cSID dans le segment suivant.

11. Procédé selon la revendication 10, dans lequel le c-Tag correspond à un nombre de uns ayant une longueur du second nombre d'unités de données et l'End-c correspond à un nombre de zéros ayant une longueur du second nombre d'unités de données, ou dans lequel le c-Tag correspond à un nombre de zéros ayant une longueur du second nombre d'unités de données et l'End-c correspond à un nombre de uns ayant une longueur du second nombre d'unités de données.

12. Procédé selon l'une quelconque des revendications 10 à 11, comprenant en outre le retrait du segment suivant en copiant le segment actuel sur le segment suivant et en décrémentant la valeur SL de un lorsque le second cSID est déterminé comme étant le c-Tag.

13. Procédé selon les revendications 11 et 12, comprenant en outre le décalage des cSID vers la gauche par le second nombre d'unités de données à partir du second cSID dans le segment suivant lorsqu'il est déterminé que le second cSID n'est pas le c-Tag, et la copie du c-Tag à la place du dernier cSID dans le segment suivant.

14. Procédé selon l'une quelconque des revendications précédentes, dans lequel le premier nœud est un nœud de transit du domaine de réseau SR.

15. Procédé selon l'une quelconque des revendications précédentes, dans lequel une unité de données est un octet, un quartet ou un bit.

16. Dispositif de nœud (600), comprenant :
un récepteur (620) configuré pour recevoir un paquet (170) ;
un transmetteur (640) configuré pour transmettre le paquet (170) ;
une mémoire (660) couplée au récepteur (620) et au transmetteur (640), la mémoire (660) stockant des instructions ; et
un processeur (630) couplé à la mémoire (660), dans lequel le processeur (630) est configuré pour exécuter les instructions pour amener le dispositif de nœud à effectuer le procédé selon l'une quelconque des revendications 1 à 15.

17. Système, comprenant :
un premier nœud ; et
un deuxième nœud en communication avec le dispositif de premier nœud, dans lequel le premier nœud ou le deuxième nœud est configuré pour réaliser le procédé selon l'une quelconque des revendications 1 à 15.

18. Appareil comprenant un moyen (700) permettant de transférer un paquet (170) dans un domaine de réseau de routage de segment (SR), comprenant :
un moyen de réception de paquet (710) configuré pour recevoir le paquet (170) à traiter ;
un moyen de transmission de paquet (707) couplé au moyen de réception de paquet (710), dans lequel le moyen de transmission de paquet (707) est configuré pour transférer le paquet (170) à un autre nœud ;
un moyen de stockage (703) couplé à au moins l'un parmi le moyen de réception de paquet (710) ou le moyen de transmission de paquet (707), dans lequel le moyen de stockage (703) est configuré pour stocker des instructions ; et
un moyen de traitement de paquet (705) couplé au moyen de stockage (703), dans lequel le moyen de traitement de paquet (705) est configuré pour exécuter les instructions stockées dans le moyen de stockage (703) afin de réaliser le procédé selon l'une quelconque des revendications 1 à 15.
